# EUROPEAN PATENT APPLICATION

(11) **EP 1 598 735 A1**
(43) Date of publication of application: **23.11.2005**
(21) Application number: 03794677.9
(22) Date of filing: 03.02.2003
(51) Int. Cl.: G06F 3/033, G06F 9/44

(54) **CONTROL METHOD AND SYSTEM OF VERTICALLY-MOVABLE BANDS FOR A USER INTERFACE**

(71) Applicant: Poweroffice, S.A., 08005 Barcelona (ES)
(72) Inventor: DOMENECH RIERA, Eudald, 08005 Barcelona (ES)
(74) Representative: Gallego Jiménez, José Fernando
(86) International application number: PCT/ES2003/000061
(87) International publication number: WO 2004/070603

(57) **Abstract**

The graphic interface is viewed via several viewing means of a processing unit, and is **characterized by** the fact that each of said strips which are vertically displaceable like blinds (11) is associated with a control element (6) on a control elements (6) bar (5) on the graphic interface (1), the control elements of which (6) are activated by a user to open and close said strips (11), which, when open, include a panel (13) showing at least one graphic element (14) whereon the user acts.

The system is designed as a system to improve user productivity, increasing his organization ability and making the system more user friendly.

## Description

The invention herein refers to a control method and system for strips which are vertically displaceable like blinds for a user interface which is viewable via several viewing means of a processing device, for the integration of applications.

### Background of the invention

The emergence of operating systems, and therefore applications, with graphic user interfaces, has made computers considerably easier to use. Specific examples of graphic operating systems are the Microsoft *Windows* ® operating system and the *Apple* ® operating system.

Unlike previous operating systems which were text-based, each application integrated in a graphic operating system, whether it be a system application or a non-system application, are represented by an icon which contains the access features of each of said applications, and to run the application, all the user has to do is activate said icon. In said features, it is important that the application's file name and location path are highlighted. All this implies a significant improvement for users, especially, as mentioned earlier, when running an application.

For example, a user does not need to know the path to locate the application or the name of said application he wishes to run, since all he has to do is double-click on the icon associated with the application, with a pointer controlled externally by a pointing device, such as a mouse.

In said graphic operating systems an application can also be accessed by selecting the application from a graphic menu incorporated in the operating system. Said graphic menu can basically be one of two clearly different types:
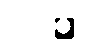 The first type of graphic menu is determined by the presence of a static menu in the operating system, which can be accessed at any time via a specific button, the menu being called static because of the fact that it does not change whatever is being done with the operating system and its integrated applications.
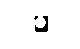 The second type is determined by the appearance of a contextual menu, which is configured depending on the situation or context in which the operating system is at a particular time or depending on the application being used.

Due to the use of said icons, the graphic operating system has also had to incorporate a structured "windows" system for organizing said icons, so that an icon, until now representing an application, can also represent a window integrating a specific set of applications.

For example, in the *Microsoft Windows* ® operating system, double-clicking the pointer on an icon representing a window which integrates a group of applications, will open said window, displaying the icons of the all applications integrated in said window.

Each of said windows primarily comprises a frame which borders the whole window, for changing the size of the window, although it may not possible to change the size of the window due to certain technical requirements; a title bar, with the name of the associated window highlighted, and thus identifying it; a useful working area where applications icons are shown; a menu bar which includes all the possible actions that can be carried out in the window and the icons it contains; a button for closing the window; a button for generating a new contextual menu with the possible actions that can be carried out in the window; a button for maximizing the window; a button for minimizing the window; and a button for recuperating the original format of the window, excluding the maximize button, which cannot appear at the same time as the button for recuperating the original window format. It is also possible for none of said elements to be present or for other window elements to appear, such as a status bar or a tool bar, which are also known in said operating systems.

Said icons can be organized in different windows using different criteria, depending on the programmer or user of said operating system. Whatever the criteria, an icon for opening a window which contains other icons must always be double-clicked. Double-clicking on one of said icons can also produce a new window with more icons, one of which can open another window with more icons, and so on.

For this reason, if said organization of windows is not correctly structured, it can make working with a graphic operating system a complex task, if not done correctly. Poor organization of the operating system can make it, and its integrated applications, difficult to use.

Due to the limited computer knowledge of many users, the organizational system described above is basic so that it does not hinder said users from using existing computer systems

This implies another inconvenience for users working for one particular company, since the more difficulties there are to be confronted the lower the productivity.

Also, any application run by a user means that one or more windows must be opened, and the amount of information displayed on screen can interfere with the effective use of the operating system or integrated applications. If open windows are closed to remove some of the information displayed on screen, access to the applications is also closed, meaning that all the closed windows have to be reopened if the previous application, or another application integrated in the window of said previously running application, needs to be run again.

Another inconvenience is that when an application is running, given that a new applications window opens in the operating system, in no way related to the environment to which it belongs, i.e., the window which opens is separate from the window in which the application icon is integrated, making the application completely isolated, for example, from other applications which may be associated with said application and which may be needed to maintain said relationship.

In an attempt to resolve said inconveniences, operating systems provide the possibility of creating a direct access to an application from the desktop. Depending on the number of applications used by a user, the presence of a higher or lower number of direct accesses can lead to poor organization of said icons, making it very hard to find the desired application icon.

### Description of the invention

The invention herein resolves all the aforementioned problems, providing new additional technical features, which will be described later.

A feature of the invention, the method for controlling strips which are vertically displaceable like blinds for a user interface, which is viewable via several viewing means of a processing unit, is characterized by the fact that it comprises the following steps:
A. a user accesses the graphic user interface, which contains a bar of control elements, each control element being associated with an strip which is vertically displaceable like blinds;
B. the user selects one of said control elements to activate the strip which is vertically displaceable like blinds associated with said control element, by placing a pointer controlled by a pointing device, connected to a processing unit, over said control element);
C. the user clicks on a predetermined button of the pointing device over the control element of the strip, using the pointer, to make a panel on the strip appear, this panel comprising at least one graphic element whereon the user acts.

In this way, an easy-to-use and user-friendly working environment is produced which is fully aimed at productivity, integrating all the tools and applications required by a user, in a structure organized in strips which are vertically displaceable like blinds, suitable for use by the user, thus enabling him to carry out his work as efficiently as possible.

Furthermore, it also enables work to be organized easily and intuitively, allowing the user to open out the strips he requires, and have different graphic elements he can activate in each one of them.

In addition, the contents of the panels of the strips are neither deleted nor closed when the strips are closed. The contents remain active until the user decides to re-access them. This feature provides for an improved working desktop structure with fewer elements on screen since, when a window is closed, no information is lost.

Each control element preferably has a left area for the user to completely open/close the strip which is vertically displaceable like blinds, a central area for selecting the tab, and a right area for the user to control the opening/closing of a tab.

Obviously, the specific configuration of the control element clearly defines the different areas it contains.

Both the function of the left area and that of the right area of the control element basically depend on the situation in which the strip is at a given time. If the strip is closed, the user will activate the left area of the control element to completely open the tab, whereas if the strip is completely or partially open, the user will activate the right area of the control element to completely close the tab. But, if the strip is closed, the user will activate the right area of the control element to completely or partially open the tab, depending on the wishes or needs of the user, whereas if the strip is completely or partially open, the user will activate the right area of the control element to completely or partially open or close the tab, again depending on the wishes or needs of the user.

The method also includes a sub-step in which the user, using the pointing device, places the pointer over the left area of the control element and for this, step (C) includes the following sub-steps:
C.1. The user clicks on the predetermined button of the pointing device on the left area of the control element of the strip which is vertically displaceable like blinds, using the pointer, to completely open the tab, showing the entire panel of the tab; and
C.2. The control element of the strip which is vertically displaceable like blinds moves with the strip to the lowest part of the tab, outside said tab, converting the left area of the control element into an area for completely closing the tab.

The above-mentioned steps allow the strips to be opened, sliding their lower part via the viewing means, such as a computer screen, down to their lowest part of the viewing means, to show all the element integrated in the tab, which occupies most of the screen.

If all the strips are closed, activating the left area of the control element will completely open the strip associated with the control element.

If a strip is partially or completely open, the sub-steps would be as follows:
C.1. The user clicks on the predetermined button of the pointing device on the left area of the control element of the strip which is vertically displaceable like blinds, using the pointer, to completely close the tab; and
C.2. The control element of the strip which is vertically displaceable like blinds moves with the strip to the control elements bar, converting the left area of the control element into an area for completely opening the tab.

Step (B) includes a sub-step in which the user, using the pointing device, places the pointer over the right area of the control element and for this, step (C) includes the following sub-steps:
C.1. The user holds down the predetermined button of the pointing device on the right area of the control element of the tab, using the pointer;
C.2. The user drags the pointer vertically, using the pointing device, to a position which shows the desired part of the panel of the tab, the user then releasing the predetermined button of the pointing device; and
C.3. The control element of the strip which is vertically displaceable like blinds moves with the strip to the lowest part of the tab, outside said tab, converting the left area of the control element into an area for completely closing the tab.

In the same way as the previous case, the right area of the control element is clearly marked by the suitable configuration of said control element.

By carrying out the steps described, the strip is opened to the user's desired position. In this way, several strips can be open in different positions allowing direct access simultaneously to elements on different tabs.

And, if all the strips are closed, the user will activate the right area of the control element to partially or completely open the strip associated with the control element.

If a strip is partially or completely open, and the user wishes to completely close the tab, sub-step (C.3) would be as follows:
C.3. The control element of the strip which is vertically displaceable like blinds moves with the strip towards the highest part and moves to the control elements bar, converting the left area of the control element into an area for completely opening the tab.

This method can also include the following steps:
D. The user places the pointer, using the pointing device, over the central area of the control element of the tab; and
E. The user clicks on the predetermined button of the pointing device to select the tab, using the pointer.

If more than one strip which is vertically displaceable like blinds has been opened via the aforementioned method, any given strip can be accessed by activating the central area of its control element. By clicking on the central area of the control element with the pointing device, the viewable information contained in the panel of the vertically-sliding strip selected is shown on the screen of the processing unit, and is partially or completely open.

Furthermore, step (C) includes a sub-step, in which a second control element of the strip which is vertically displaceable like blinds is shown in the control elements bar of the graphic user interface.

Given that when a strip is opened, the control element moves together with the strip to its lowest position, and a second control element of the strip is shown, which takes up no more screen space since it is in the same place as the control element of the tab, allowing further opportunities for activating said strip and the elements on its panel.

Also, the second control element of each of the strips which are vertically displaceable like blinds preferably includes a left area for generating a contextual menu of options available on the tab, and a remaining right area for selecting the tab.

In the same way as for the control elements described earlier, the second control elements also have clearly-defined areas which can be activated.

This method also includes the following steps:
F. The user places the pointer, by moving the pointing device, over the left area of the second control element of the strip which is vertically displaceable like blinds; and
G. The user clicks on the predetermined button of the pointing device, making the contextual menu of options available on the strip appear.

The contextual menu is a drop-down menu in the left area of the second control element, via which the default options on the panel of the strip which is vertically displaceable like blinds can be accessed. The elements in use are also available, and can be brought to the forefront just by placing the pointer on the menu option and clicks on the predetermined button of the pointing device.

The method also includes the following steps:
H. The user places the pointer, by moving the pointing device, over the, remaining right area of the second control element of the tab; and
I. The user clicks on the predetermined button of the pointing device to select the tab.

Said action defined in the aforementioned steps is the same as the action for clicking on the central part of the control element of a tab. The ability to carry out this same action on different elements makes it more versatile and easy to use.

Preferably, at least one graphic element shown on the panel of the strip which is vertically displaceable like blinds is associated with an application.

In this way, applications can be integrated on each tab, enabling them to be organized according to different criteria. It is also possible to have applications open on each tab, resulting, *inter alia*, in an increase in user productivity. And, as mentioned earlier, a strip can be closed without losing information, since the contents of the panel of the strip are neither closed nor deleted when said band is closed. This allows the user to work with different applications simultaneously, using a minimum amount of useful screen space, since the strips containing the applications not required can be closed at any given time. The user can thus access any of the integrated applications with the full screen, concentrating only on those, or can work in an ordered way with various applications simultaneously, using a multi-tasking system.

Types of integrated systems, for example, are productivity applications, including all those applications involving the productivity, for example, of a company; horizontal applications, including all those applications used for the management, for example, of a company; and sectorial applications, which include all those applications specific to the sector in which the company operates. Other applications can be integrated, such as those providing services to the users.

The method also includes the following useful steps:
J. The user places the pointer, by moving the pointing device, over the graphic element of the application he wishes to run; and
K. The user clicks on the predetermined button of the pointer device to run the application, opening an application screen in the tab.

In this way, any application can be run in any of the strip which is vertically displaceable like blinds.

The graphic user interface also includes a useful graphic button for automatically closing all the strips which are vertically displaceable like blinds which are open.

Using this button makes it easy to manage the tabs, since, by clicking on just one button, all the strips close automatically.

The method for this includes the following steps:
L. The user places the pointer, by moving the pointing device, over the button for automatically closing all the strips which are open; and
M. The user clicks on the predetermined button of the pointing device to close all the strips which are open, using the pointer.

One feature of the invention is that the application screen has a bar with the graphic buttons of the applications which are open on the same strip which is vertically displaceable like blinds.

This allows the user to work at different levels of the same application or with different applications of a strip on the same tab, providing easy access to each of said levels or applications by simply clicks on its corresponding button on the graphic buttons bar.

The method thus includes the following steps:
N. The user places the pointer, by moving the pointing device, over one of the graphic buttons of the graphic buttons bar of the applications which are open on the same tab; and
O. The user clicks on the predetermined button of the pointing device, to make the application screen of the application associated to the graphic button selected appear on the panel of the strip which is vertically displaceable like blinds.

The application screen also includes a useful graphic button for saving the application information.

In this way, the information contained on screen can be stored without having to interact with the application that generated said information. It is a button which is external to the integrated application and, while running, belongs to the application screen.

In this case, the method includes the following steps:
P. The user places the pointer, by moving the pointing device, over the graphic button for saving application information; and
Q. The user clicks on the predetermined button of the pointing device to store the application information.

The control element of each strip which is vertically displaceable like blinds, as well as the second control element of each strip which is vertically displaceable like blinds, are graphic buttons.

Since, nowadays, operating systems with a graphic environment are normally used, applications or similar programs which run on said operating systems also usually have graphic environments.

The pointing device will preferably be a mouse.

Another feature of the invention is that the system for strips which are vertically displaceable like blinds for a graphic user interface, which are viewable via several viewing means of a processing unit, is characterized by the fact that each of the strips which are vertically displaceable like blinds is associated with a control element on a control elements bar on the graphic user interface shown via the viewing means, whose control elements are activated by a user to open and close said tabs, which, once open, have a panel which displays at least one graphic element which the user can activate.

The system is designed as a system to improve user productivity, increasing his organizational ability and making the system more user friendly.

Each control element has a left area for the user to completely open/close the strip which is vertically displaceable like blinds, a central area for selecting the tab, and a right area for the user to control the opening/closing of the tab.

When a strip is opened, the control element of the control elements bar associated with the strip is in the lowest part of the tab, outside said tab.

Also, when a strip is opened, the system has a second control element of said strip which occupies the position of the control element of the tab, in the control elements bar.

Said second control element of each of the strips which are vertically displaceable like blinds includes a left area for generating a contextual menu of options available on the tab, and a remaining right area for selecting the tab.

Furthermore, at least one graphic element shown on the panel of the strip which is vertically displaceable like blinds is associated with an application.

Running an application in a strip which is vertically displaceable like blinds, also produces an associated application screen.

Said application screen includes a bar for the graphic buttons of the applications which are running on the same tab, and a button for storing all the information of the application which is running.

The graphic user interface shown via the view means of the processing unit includes a graphic button for automatically closing all the strips which are open.

Both the control element of each strip which is vertically displaceable like blinds, as well as the second control element of each strip which is vertically displaceable like blinds, are graphic buttons.

Another feature of the invention is that the panel of each of the strips which are vertically displaceable like blinds always remains active.

This means that the information (icons, applications, etc.) present on the panel of a strip is neither closed nor deleted, but stays active until the user decides to re-access it.

### Brief description of the drawings

To provide a better understanding of what has been presented, several drawings are attached in which, diagrammatically, and purely as a non-limitative example, a practical case of embodiment is represented.

In the drawings:
Figure 1 is a diagrammatical view of a graphic user interface which includes the system for vertically-sliding tabs, being the object of the invention, in which certain elements of the system of the invention and of the graphic interface are shown in detail;
Figure 2 is a diagrammatical view of the graphic user interface of Figure 1, in which the system of vertically-sliding strips has one of the strips completely open, showing some elements of the system of the invention in detail;
Figure 3 is a diagrammatical view of the graphic user interface of Figure 1, in which the system of vertically-sliding strips has a number of open tabs, one of which is partially open; and
Figure 4 is a diagrammatical view of the graphic user interface of Figure 1, in which the system of vertically-sliding strips has a completely open strip and a partially open tab, this strip having an application running, showing an element of the system of the invention in detail.

### Description of preferred embodiments

A description of a preferred embodiment of the invention will be given below, in which the control elements and the second control elements are graphic buttons, the processing unit is a personal computer, the viewing means are a personal computer screen, the pointing device is a mouse connected to the personal computer, and the strip which is vertically displaceable like blinds are referred to as pull-down tabs.

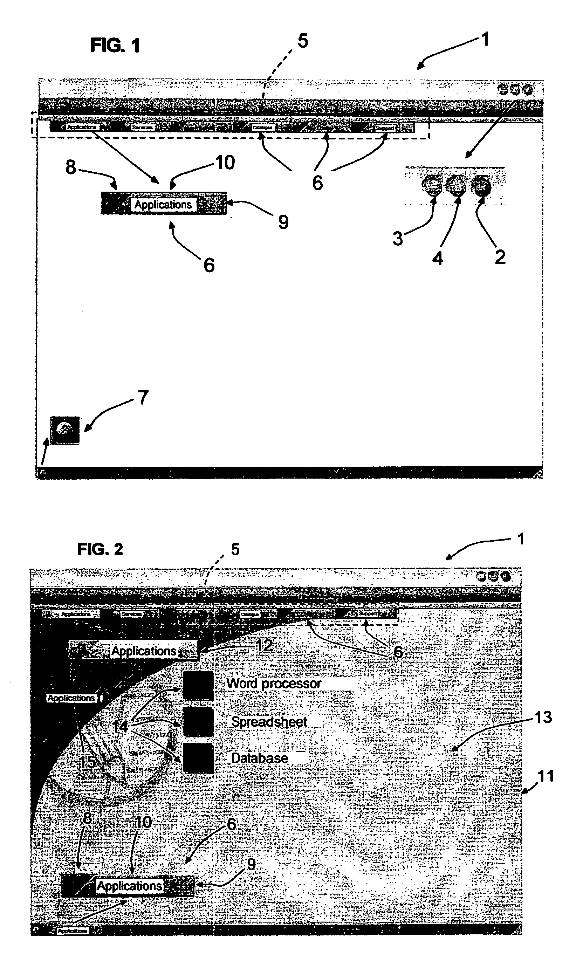

As can be seen in Figure 1, the system of strips which are vertically displaceable like blinds, object of the invention, has a graphic user interface 1 comprising a graphic button 2 for closing the interface, a graphic button 3 for minimizing the interface 1 and a graphic button 4 for maximizing the interface. If the interface 1 has already been maximized, the button 4 for maximizing the interface is substituted by a graphic button for recuperating the size of the interface (not represented).

The interface also comprises a bar 5 of graphic buttons 6 which identifies the system of pull-down strips of the invention, in its initial state, before a user activates said system, and a graphic button 7 for automatically closing all the pull-down strips which are open when the button is clicked on.

Each graphic button 6 associated with a pull-down strip has a left area 8 for completely opening the pull-down strip on the computer screen, a right area 9 which is for the user to control the opening of the pull-down tab, and a central area 10 for selecting and viewing the pull-down strip in the foreground if completely or partially open.

In Figure 2 a pull-down strip 11 is shown with a graphic button 6 for partially or completely opening and closing the pull-down strip 11, a second graphic button 12, and a panel 13 where there are a number of graphic buttons 14 associated with applications available to the user.

The second graphic button 12 of the pull-down strip 11 also has a left area 15 for generating a drop-down contextual menu which shows the same options 14 as those on the panel 13 and the options 14 of the panel 13 which are running; and a remaining right area 16 for selecting and viewing the pull-down strip 11 in the foreground.

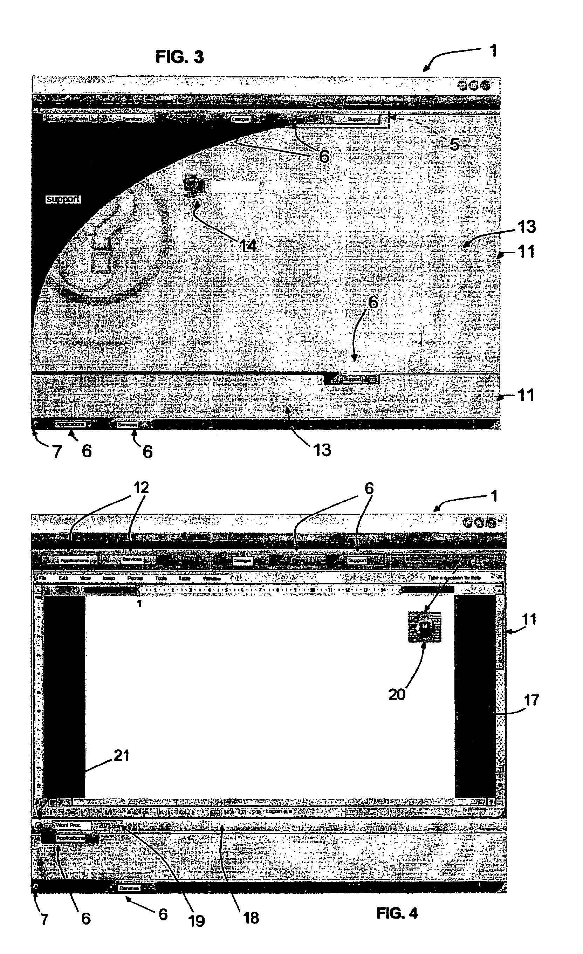

Figure 3 shows the graphic user interface 1 with various pull-down strips 11 open at the same time. As can be seen, there are two pull-down strips 11 which are completely open and one pull-down strip 11 which is partially open, which is in the foreground. The graphic buttons bar 5 has the second graphic button 12 for those pull-down strips which are completely or partially open. To access one of the completely open pull-down strips 11, all the user has to do is activate the central area 10 of the graphic button 6 of the pull-down strip 11, which is completely open, to bring it into the foreground, showing the information contained on its panel 13.

Figure 4 shows a pull-down strip 11 with an application running, such as a word-processing software package. Said application has an application screen 17 which occupies the whole surface of the partially open pull-down strip 11. Said application screen 17 has a bar 18 of graphic buttons 19 of the applications open on the pull-down strip 11. If various applications are running on the same pull-down strip 11, a button 19 appears for each application, and to access one of these applications, all that needs to be done is activate the graphic button 19 representing the application which is running.

The application screen 17 also has a graphic button 20 for storing the information contained on said application screen 17. If the user activates said button 20, the information is automatically stored in a predefined place.

When a user opens a graphic user interface 1 which incorporates the system of pull-down strips 11 of the invention, to work on it, it initially shows a bar 5 of graphic buttons 6, each one of which is part of and represents a pull-down strip 11. In this situation, when the user wishes to access, for example, an application, he has two options:
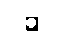 place the pointer of the mouse connected to the personal computer over the left area 8 of the graphic button 6 of the pull-down strip 11 containing said application, and click on a predetermined button of the mouse on said left area 8, using the pointer shown on the screen of the personal computer, completely opening the panel 13 of the pull-down strip 11; or
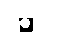 place the mouse pointer over the right area 9 of the graphic button 6 of the pull-down strip 11 containing said application, click on the predetermined button of the mouse on said right area 9, using the pointer, and, while holding down the button, vertically move the pointer downwards using the mouse until the panel 13 of the pull-down strip 11 is opened as required.

Whichever option the user chooses, the action described produces a series of events in the system of pull-down strips 11 of the invention. First, opening the panel 13 of the pull-down strip 11 makes the graphic icons 14 viewable on said panel 13, associated with determined applications, meaning that the user can now access the desired application. Also, the graphic button 6 of the pull-down strip 11 moves to the lowest part of the pull-down tab, outside the pull-down tab. This move also changes the graphic button 6, since its left area 8 is reconverted, so that instead of completely opening the pull-down strip 11, which serves no purpose in the given situation, it provides the option to completely close the pull-down strip 11, so that if the user places the pointer on said left area 8 of the graphic button 6 and clicks on the predetermined button of the mouse, the panel 13 of the pull-down strip 11 will be completely closed, returning to the original position of the pull-down strip 11 represented by the graphic button 6 on the bar 5 of graphic buttons 6. Furthermore, another event caused by the user's actions is the appearance of the second graphic button 12 of the pull-down strip 11 on the bar 5 of graphic buttons 6.

Once a pull-down strip is open, the user can activate one of the graphic icons 14 on the panel 13 of the pull-down strip 11 to open the desired application, associated with said graphic icon 14, and can work on it; he can activate the open pull-down strip 11; or he can activate any other pull-down strip 11 available in the system, activating, more specifically, its graphic button 6, given that the other remaining pull-down strips 11 are still in their initial position.

If the user decides to activate a graphic icon 14, all he has to do is place the pointer on the icon 14 representing the application he wishes to run, and clicks on the predetermined mouse button. The application screen 17 is automatically opened and occupies the whole surface of the panel 13 of the pull-down strip 11, whose application screen 17 has the bar 18 of graphic buttons 19 with the graphic button 19 of the application which is running. If the user runs more applications on the same pull-down strip 11, each of said applications will be represented by a graphic button 19 on the bar 18, thus enabling the user to access any of the applications which are running simply by placing the pointer on the button 19 of the desired application and clicks on the predetermined mouse button on said button 19, using the pointer. Each application screen 17 also shows the graphic button 20 for storing information generated by the application. The bar 18 of applications open on the application screen 17 also has a button 21 for automatically minimizing all the applications which are running on the pull-down tab, once again showing the graphic icons 14 on the panel 13 of the pull-down strip 11.

If the user decides to activate the open pull-down strip 11, he can do so by activating the graphic button 6 or the second graphic button 12. As described already, if the user activates the left area 8 of the graphic button 6 the pull-down strip 11 is completely closed, if the user activates the right area 9 of said button 6 the panel 13 of the pull-down strip 11 can be partially or completely closed, while if the user activates the central area 10 of the button 6, only the pull-down strip 11 is selected. If the user activates the left area of the second graphic button 12 of the pull-down tab, a drop-down menu appears showing all the applications integrated in the panel 13 of the pull-down strip 11 and all the applications which are running in the pull-down tab, it being possible to open another application or open an application which is already running, via the same action as that for activating the graphic button 19 of the application on the bar 18.

If the user decides to activate a new pull-down strip 11, the same actions as those so far described for the first pull-down strip 11 should be followed. Here, if several pull-down strips are open, all the user needs to do is place the pointer over the central area of the graphic button and click on the predetermined mouse button to select the desired pull-down strip 11 and follow the relevant actions described earlier. The button 20 for automatically closing all the open pull-down strips 11 can also be used.

It should be pointed out that when a pull-down strip closes 11, the information contained on its panel 13, for example, an application which is running, neither closes nor is deleted, but remains active until the user decides to return to said pull-down strip 11.

In spite of what has been described and represented in a specific embodiment of the invention herein, it is obvious that a person skilled in the art could introduce variations and modifications, or substitute certain details for others which are technically the same, without moving away from the field defined for protecting the claims herein.

## Claims

1. Method for controlling strips which are vertically displaceable like blinds of a graphic user interface (1) which is viewable through displaying means of a processing unit, **characterized in that** it comprises the following steps:
R. a user accesses the graphic user interface (1), which contains a bar (5) of control elements (6), each control element (6) being associated with an strip (11) which is vertically displaceable like blinds;
S. the user selects one of said control elements (6) to activate the strip (11) which is vertically displaceable like blinds associated with said control element, by placing a pointer controlled by a pointing device, connected to a processing unit, over said control element (6);
T. the user clicks on a predetermined button of the pointing device over the control element (6) of the strip (11), using the pointer, to make a panel (13) on the strip (11) appear, this panel (13) comprising at least one graphic element (14) whereon the user acts.

2. Method according to claim 1, **characterized in that** each control element (6) comprises a left area (8) for the user to completely open/close the strip (11) which is vertically displaceable like blinds, a central area (10) for selecting the strip (11), and a right area (9) for the user to control the opening/closing of the strip (11).

3. Method according to claim 2, **characterized in that** the step (B) comprises a sub-step in which the user, using the pointing device, places the pointer over the left area (8) of the control element (6) and **in that** the step (C) comprises the following sub-steps:
C.1. The user clicks on the predetermined button of the pointing device on the left area (8) of the control element (6) of the strip (11) which is vertically displaceable like blinds, using the pointer, to completely open the strip, showing the entire panel (13) of the strip (11); and
C.2. The control element (6) of the strip (11) which is vertically displaceable like blinds moves with the strip to the lowest part of the strip (11), outside said strip, converting the left area (8) of the control element (6) into an area for completely closing the strip (11).

4. Method according to either claims 2 or 3, **characterized in that** the step (B) comprises a sub-step in which the user, using the pointing device, places the pointer over the right area (9) of the control element (6) and **in that** the step (C) comprises the following sub-steps:
C.1. The user holds down the predetermined button of the pointing device on the right area (9) of the control element (6) of the strip (11), using the pointer;
C.2. The user drags the pointer vertically, using the pointing device, to a position showing the desired part of the panel (13) on the strip (11), the user then releasing the predetermined button of the pointing device; and
C.3. The control element (6) of the strip (11) which is vertically displaceable like blinds moves with the strip to the lowest part of the strip, outside said strip, converting the left area (8) of the control element (6) into an area for completely closing the strip (11).

5. Method according to any of claims 2 to 4, **characterized in that** it comprises the following steps:
U. The user places the pointer, using the pointing device, over the central area (10) of the control element (6) of the strip (11); and
V. The user clicks on the predetermined button of the pointing device to select the strip (11), using the pointer.

6. Method according to any of the preceding claims, **characterized in that** the step (C) comprises a sub-step, where a second control element (12) of the strip (11) which is vertically displaceable like blinds is shown in the control elements (6) bar (5) of the graphic user interface (1).

7. Method according to claim 6, **characterized in that** the second control element (12) of each of the strips (11) which are vertically displaceable like blinds comprises a left area (15) for generating a contextual menu of options available on the strip, and a remaining right area (16) for selecting the strip (11).

8. Method according to claim 7, **characterized in that** it also comprises the following steps:
W. The user places the pointer, by moving the pointing device, over the left area (15) of the second control element (12) of the strip (11) which is vertically displaceable like blinds; and
X. The user clicks on the predetermined button of the pointing device, making the contextual menu of options available on the strip (11) appear.

9. Method according to either claims 7 or 8, **characterized in that** it comprises the following steps:
Y. The user places the pointer, by moving the pointing device, over the, remaining right area (16) of the second control element (12) of the strip (11); and
Z. The user clicks on the predetermined button of the pointing device to select the strip (11).

10. Method according to any of the preceding claims, **characterized in that** at least one graphic element (14) shown on the panel (13) of the strip (11) which is vertically displaceable like blinds is associated with an application.

11. Method according to claim 10, **characterized in that**, if the strip (11) is open, it comprises the following steps:
AA.The user places the pointer, by moving the pointing device, over the graphic element (14) of the application he wishes to run; and
BB.The user clicks on the predetermined button of the pointer device to run the application, opening an application screen (17) in the strip (11).

12. Method according to any of the preceding claims, **characterized in that** the graphic user interface (1) comprises a graphic button (7) for automatically closing all the strips (11) which are vertically displaceable like blinds which are open.

13. Method according to claim 12, **characterized in that** it comprises the following steps:
CC. The user places the pointer, by moving the pointing device, over the button (7) for automatically closing all the strips (11) which are open; and
DD. The user clicks on the predetermined button of the pointing device to close all the strips (11) which are open, using the pointer.

14. Method according to any of claims 11 to 13, **characterized in that** the application screen (17) comprises a bar (18) with the graphic buttons (19) of the applications which are open on the same strip (11) which is vertically displaceable like blinds.

15. Method according to claim 14, **characterized in that** it comprises the following steps:
EE.The user places the pointer, by moving the pointing device, over one of the graphic buttons (19) of the graphic buttons (1) bar (18) of the applications which are open on the same strip (11); and
FF. The user clicks on the predetermined button of the pointing device, to make the application screen (17) of the application associated with the graphic button (19) selected appear on the panel (13) of the strip (11) which is vertically displaceable like blinds.

16. Method according to any of claims 11 to 15, **characterized in that** the application screen (17) comprises a graphic button (20) for saving application information.

17. Method according to claim 16, **characterized in that** it comprises the following steps:
GG. The user places the pointer, by moving the pointing device, over the graphic button (2) for saving application information; and
HH. The user clicks on the predetermined button of the pointing device to store the application information.

18. Method according to any of the preceding claims, **characterized in that** the control element of each of the strips (11) which are vertically displaceable like blinds is a graphic button (6).

19. Method according to any of claims 6 to 18, **characterized in that** the second control element of each of the strips (11) which are vertically displaceable like blinds is a graphic button (12).

20. Method according to any of the preceding claims, **characterized in that** the pointing device is a mouse.

21. Strip system with strips which are vertically displaceable like blinds for a graphic user interface (1) which is viewable through displaying means of a processing unit, **characterized in that** each of the strips (11) which are vertically displaceable like blinds is associated with a control element (6) on a control elements (6) bar (5) on the graphic user interface (1) shown through the displaying means, on whose control elements (6) a user acts to open and close said strips (11), which, when open, comprise a panel (13) in which there is at least one graphic element (14) whereon the user acts.

22. Strip system according to claim 21, **characterized in that** each control element (6) comprises a left area (8) for the user to completely open/close the strip (11) which is vertically displaceable like blinds, a central area (10) for selecting the strip, and a right area (9) for the user to control the opening/closing of the strip (11).

23. Strip system according to either claims 21 or 22, **characterized in that** when an strip (11) is opened, the control element (6) of the control elements (6) bar (5) associated with the strip (11) moves to the lowest part of the strip, outside said strip.

24. Strip system according to any of claims 21 to 23, **characterized in that**, when an strip (11) is opened, it comprises a second control element (12) of said strip which occupies the position of the control element (6) of the strip (11), in the control elements (6) bar (5).

25. Strip system according to claim 24, **characterized in that** the second control element (12) of each of the strips (11) which are vertically displaceable like blinds comprises a left area (15) for generating a contextual menu of options available on the strip, and a remaining right area (16) for selecting the strip (11).

26. Strip system according to any of claims 21 to 25, **characterized in that** at least one graphic element (14) shown on the panel (13) of the strip (11) which is vertically displaceable like blinds is associated with an application.

27. Strip system according to claim 26, **characterized in that**, running an application in an strip (11) which is vertically displaceable like blinds has associated an application screen (17).

28. Strip system according to claim 27, **characterized in that**, the application screen (17) comprises a bar (18) of graphic buttons (19) for the applications which are running on the same strip (11).

29. Strip system according to either claims 27 or 28, **characterized in that** the application screen (17) comprises a button (20) for storing all the information of the application which is running.

30. Strip system according to any of claims 21 to 29, **characterized in that** the graphic user interface (1) shown through the displaying means of the processing unit comprises a graphic button (7) for automatically closing all the strips (11) which are open.

31. Strip system according to any of claims 21 to 30, **characterized in that** the control element of each of the strips (11) which are vertically displaceable like blinds is a graphic button (6).

32. Strip system according to any of claims 21 to 31, **characterized in that** the second control element of each of the strips (11) which are vertically displaceable like blinds is a graphic button (12).

33. Strip system according to any of claims 21 to 32, **characterized in that** the panel (13) of each of the strips (11) which are vertically displaceable like blinds always stays active.
